# EUROPEAN PATENT SPECIFICATION

(11) **EP 3 431 714 B1**
(45) Date of publication and mention of the grant of the patent: **16.06.2021**
(21) Application number: 18184057.0
(22) Date of filing: 17.07.2018
(51) Int. Cl.: F02C 7/04, F01D 9/06, F01D 9/04, F01D 15/12, F02C 7/36

(54) **AIR INLET FOR A GAS TURBINE ENGINE**
LUFTEINLASS FÜR EINEN GASTURBINENMOTOR
ENTRÉE D'AIR AIR POUR MOTEUR À TURBINE À GAZ

(30) Priority: 17.07.2017 US 201715651289
(43) Date of publication of application: 23.01.2019
(73) Proprietor: Pratt & Whitney Canada Corp., Longueuil, Québec J4G 1A1 (CA)
(72) Inventor: MACFARLANE, Ian, (01BE5) Longueuil, Québec J4G 1A1 (CA); MITROVIC, Lazar, (01BE5) Longueuil, Québec J4G 1A1 (CA)
(74) Representative: Dehns

(56) References cited:
- EP-A1- 2 998 543
- EP-A1- 3 339 606
- EP-A2- 2 565 420
- WO-A1-2015/189522
- US-A1- 2005 132 693

## Description

### TECHNICAL FIELD

The application relates generally to gas turbine engines and, more particularly, to air inlets for gas turbine engines.

### BACKGROUND

Power is sometimes taken from one or more of the central shafts of the turbomachinery of a gas turbine engine to drive other components of the engine. This arrangement can include the central shaft of the engine being engaged to another drive shaft that drives a gearbox of the engine.

EP 3339606 A1 discloses a gas turbine engine falling under Article 54(3) of the European Patent Convention. It shows a gas turbine engine comprising a compressor section and a turbine section drivingly engaged with a drive shaft, the drive shaft being rotatable about a center axis of the gas turbine engine, and a radial air inlet in fluid communication with the compressor section, the radial air inlet having an inlet duct defined between two axially-spaced radially-extending annular walls.

WO2015189522 A1 shows a gas turbine engine with a transmission shaft extending through a radially extending strut to provide power to an accessory box.

### SUMMARY

In one aspect, there is provided a gas turbine engine, comprising: a compressor section and a turbine section drivingly engaged with a drive shaft, the drive shaft being rotatable about a center axis of the gas turbine engine; a radial air inlet in fluid communication with the compressor section, the radial air inlet having an inlet duct defined between two axially-spaced radially-extending annular walls and having a plurality of circumferentially-spaced axially-extending struts extending between the annular walls adjacent a radially-outer portion of the air inlet, at least one of the struts having an internal passage extending between a first opening in a forward end of the strut and a second opening in an aft end of the strut, the first and second openings being axially spaced apart; and a transmission shaft extending through the internal passage of said strut.

In a further aspect, there is provided a method of operating a gas turbine engine as defined above, comprising: drawing air from a radially-outer portion of a radial air inlet of the engine to a radially-inner portion of the air inlet, the air inlet having circumferentially spaced-apart struts; and driving a rotatable load of the engine with a transmission shaft extending across the air inlet and through one of the struts Further aspects of the invention are defined in the dependent claims.

### DESCRIPTION OF THE DRAWINGS

Reference is now made to the accompanying figures in which:
Fig. 1 is a schematic cross-sectional view of a gas turbine engine, according to an embodiment of the present disclosure; and
Fig. 2A is an enlarged cross-sectional view of an air inlet of the gas turbine engine of Fig. 1; and
Fig. 2B is a cross-sectional view of the air inlet of Fig. 2A taken along the line IIB-IIB in Fig. 2A.

### DETAILED DESCRIPTION

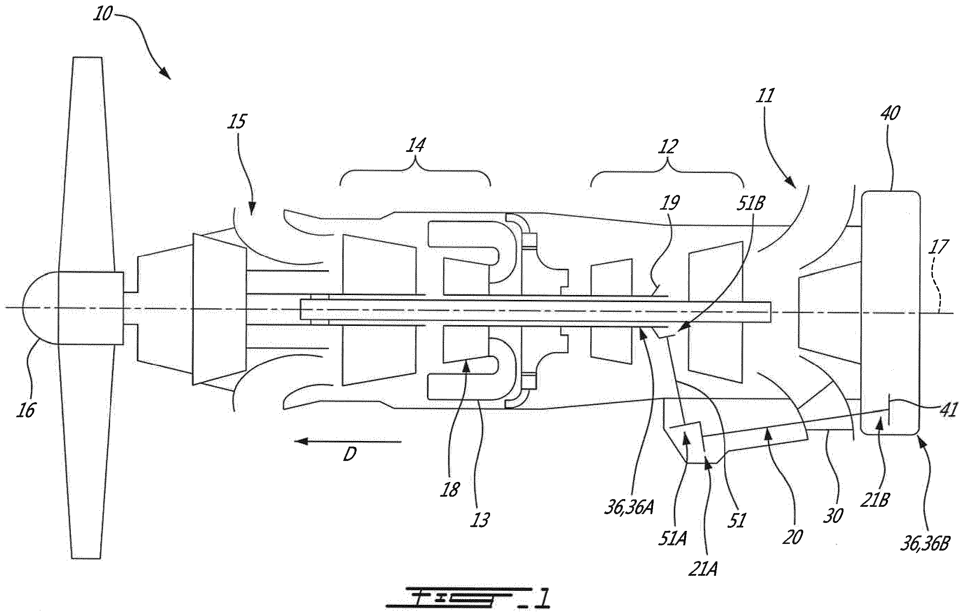

Fig. 1 illustrates a gas turbine engine 10 of a type preferably provided for use in subsonic flight, generally comprising in serial flow communication an air inlet 11, a compressor section 12 for pressurizing the air from the air inlet 11, a combustor 13 in which the compressed air is mixed with fuel and ignited for generating an annular stream of hot combustion gases, a turbine section 14 for extracting energy from the combustion gases, and an exhaust outlet 15 through which the combustion gases exit the gas turbine engine 10. The gas turbine engine 10 includes a propeller 16 which provides thrust for flight and taxiing. The gas turbine engine 10 has a longitudinal center axis 17. A drive shaft 19 mechanically couples the turbine section 14 and the compressor section 12, and extends between them. The drive shaft 19 is coaxial with the center axis 17 of the gas turbine engine 10 and rotatable about the center axis 17. The drive shaft 19 allows the turbine section 14 to drive the compressor section 12 during operation of the gas turbine engine 10. In the depicted embodiment, the air inlet 11 is positioned aft of the compressor section 12.

The gas turbine engine 10 (sometimes referred to herein simply as "engine 10") has a central core 18 through which gases flow and which includes some of the turbomachinery of the engine 10. The engine 10 is a "reverse-flow" engine 10 because gases flow through the core 18 from the air inlet 11 at a rear portion, to the exhaust outlet 15 at a front portion. This is in contrast to "through-flow" gas turbine engines in which gases flow through the core of the engine from a front portion to a rear portion. The direction of the flow of gases through the core 18 of the engine 10 disclosed herein can be better appreciated by considering that the gases flow through the core 18 in the same direction D as the one along which the engine 10 travels during flight. Stated differently, gases flow through the engine 10 from a rear end towards the propeller 16. In the embodiment of Fig. 1, the engine 10 has multiple spools which perform compression to pressurize the air received through the air inlet 11, and which extract energy from the combustion gases before they exit the core 18 via the exhaust outlet 15. The spools and this engine architecture are described in greater detail in US patent application serial no. 15/266,321 filed on September 15, 2016.

It will thus be appreciated that the expressions "forward" and "aft" used herein refer to the relative disposition of components of the engine 10, in correspondence to the "forward" and "aft" directions of the engine 10 and aircraft including the engine 10 as defined with respect to the direction of travel. In the embodiment shown, a component of the engine 10 that is "forward" of another component is arranged within the engine 10 such that it is located closer to the propeller 16. Similarly, a component of the engine 10 that is "aft" of another component is arranged within the engine 10 such that it is further away from the propeller 16.

Still referring to Fig. 1, a rotatable transmission shaft 20 of the engine 10 extends across the air inlet 11. As described in greater detail below, the transmission shaft 20 extends through one of the structural supports, or struts 30, of the air inlet 11. The transmission shaft 20 transmits a rotational drive force to a rotatable load 36 of the engine 10. The transmission shaft 20 also transmits a rotational drive force from the rotatable load 36. The rotatable load 36 can therefore be any suitable component, or any combination of suitable components, that is capable of receiving or conveying a rotational drive to/from the transmission shaft 20.

In the depicted embodiment, the transmission shaft 20 transmits a rotational force to a first rotatable load 36A located on one side of the air inlet 11, and transmits a rotational force to a second rotatable load 36B located on the other side of the air inlet 11. The two sides of the air inlet 11 are axially spaced apart along the center axis 17. In the depicted embodiment, the transmission shaft can also receive the rotational force from either one of the first and second rotatable loads 36A,36B. The transmission shaft 20 is mechanically coupled at a first end 21A of the transmission shaft 20 to the first rotatable load 36A, and mechanically coupled at an opposite second end 21B to the second rotatable load 36B of the engine 10. By "mechanically coupled", it is understood that the transmission shaft 20 can be, at either one of its ends 21A,21B, directly engaged to the rotatable load 36, or indirectly engaged to the rotatable load 36 via another rotating component.

In Fig. 1, the first rotatable load 36A includes the drive shaft 19 of the engine 10, and the second rotatable load 36B includes an accessory gearbox 40 of the engine 10. The accessory gearbox 40 (sometimes referred to herein simply as "AGB 40") receives a rotational output from the transmission shaft 20 and in turn drives accessories (e.g. fuel pump, starter-generator, oil pump, scavenge pump, etc.) that contribute to the functionality of the engine 10. The AGB 40 can be designed with side-facing accessories, top-facing accessories, or rear-facing accessories depending on the installation needs. In the depicted embodiment, the first and second rotatable loads 36A,36B are axially-spaced apart on opposite sides of the air inlet 11. More particularly, the drive shaft 19 is forward of the air inlet 11 and the AGB 40 is aft of the air inlet 11. In the depicted embodiment, the air inlet 11 therefore separates the drive shaft 19 from the AGB 40, and prevents the direct transmission of rotational force between the drive shaft 19 and the AGB 40. In such an engine architecture, the transmission shaft 20 helps to transfer rotational force between the drive shaft 19 and the AGB 40.

The engine 10 also has a tower shaft 51 that has a first geared end 51A and a second geared end 51B. The first end 51A of the tower shaft 51 is mechanically coupled to the transmission shaft 20, and the second end 51B of the tower shaft 51 is mechanically coupled to the drive shaft 19. The second end 51B of the tower shaft 51 meshes with the drive shaft 19 at a location that is forward of a low pressure compressor and aft of a high pressure compressor of the compressor section 12. The second end 21B of the transmission shaft 20 is directly engaged to an input gear 41 of the AGB 40. The tower shaft 51, in conjunction with the transmission shaft 20, mechanically couples and links the compressor section 12 to the AGB 40.

During operation of the engine 10, the drive shaft 19 transmits a rotational drive to the tower shaft 51 which in turn drives the transmission shaft 20 to thereby drive the input gear 41 and the accessories of the AGB 40. During some operating modes of the engine 10, for example engine start, a starter-generator accessory of the AGB 40 drives the input gear 41 of the AGB 40, which in turn transmits a rotational drive to the transmission shaft 20, which then transmits the rotational drive to the tower shaft 51 and thus to the drive shaft 19 of the engine 10.

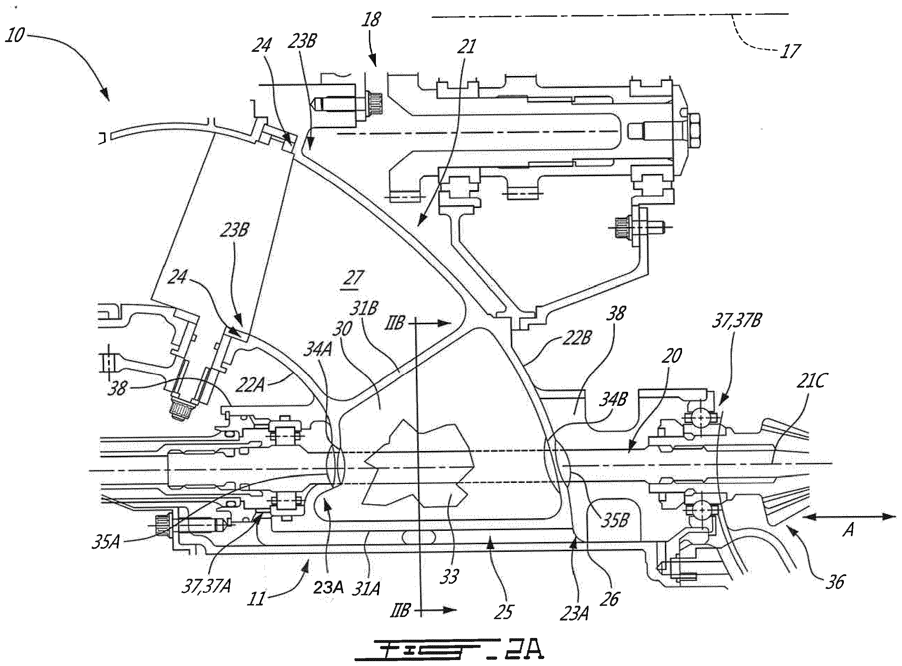

Referring to Fig. 2A, the air inlet 11 is a radial air inlet 11 because, during operation of the engine 10, air is drawn into the engine via the air inlet 11 along a substantially radial direction. The air inlet 11 is therefore the first point of entry of air into the core 18 of the engine 10.

The air inlet 11 has an inlet duct 21 along which air flows as it drawn into the engine 10. The inlet duct 21 is defined by two radially-extending annular walls 22A,22B. Each wall 22A,22B is shown as being an integral body. In an alternate embodiment, one or both of the walls 22A,22B is made up of wall segments. Each annular wall 22A,22B extends between a radially-outer portion 23A and a radially-inner portion 23B. The radially-inner portion 23B is a portion of each wall 22A,22B that is radially inward (i.e. closer to the center axis 17 of the engine 10) than the radially-outer portion 23A. Each wall 22A,22B therefore extends from an outer surface or portion of the engine 10 radially inwards toward the core 18. The walls 22A,22B in the depicted embodiment also have portions extending in an axial direction as well. The radially-inner portions 23B of each wall 22A,22B have trailing ends 24 which, in the frame of reference of the engine 10, are defined by both axial and radial direction vectors. An air opening 25 is defined at the radially-outer portions 23A of the walls 22A,22B. The air opening 25 is circumferential because it spans a portion or all of the circumference of the inlet duct 21. The air opening 25 extends through an outermost surface 26 of the engine 10. The outermost surface 26 may be located in an engine covering, such as a nacelle or casing. The air opening 25 may be provided with a screen, filter, or mesh to prevent the ingress of foreign objects into the engine 10.

The walls 22A,22B are axially spaced apart from one another. In the depicted embodiment, the wall 22B is aft of the wall 22A in a direction along the center axis 17. The axial offset between the annular walls 22A,22B defines an inner volume of the inlet duct 21 through which air is conveyed toward the compressor section 12. The spaced-apart walls 22A,22B therefore define an annular air passage 27 between them. The air passage 27 is an annular volume that extends radially inwardly at the radially-outer portions 23A and which has both axial and radial direction vectors at the radially-inner portion 23B of the walls 22A,22B.

Multiple air inlet struts 30 are located within the inlet duct 21. Each strut 30 is part of the fixed structure of the engine 10. Each strut 30 is a stationary component that helps to prevent ingress into the engine 10 of large foreign objects, and helps to provide structure to the air inlet 11. The struts 30 are circumferentially spaced-apart from one another within the inlet duct 21. Each strut 30 extends between the annular walls 22A,22B and through the annular air passage 27. Each strut 30 is attached to the annular walls 22A,22B. In the depicted embodiment, each strut 30 is integral with the walls 22A,22B. In an alternate embodiment, one or more of the struts 30 can be removably mounted to the walls 22A,22B. Each of the struts 30 in the depicted embodiment is a radial air inlet strut 30 because it extends radially inwardly. Stated differently, each strut has a radial span defined between a radially-outer edge 31A near the radially-outer portions 23A of the walls 22A,22B, and a radially-inner edge 31B near the radially-inner portions 23B of the walls 22A,22B. The inner edge 31B is radially closer to the center axis 17 than the outer edge 31A. The position of the edges 31A,31B of the strut 30 relative to the engine may vary, and what remains constant is that the edge 31B is radially inward of the edge 31A. In the embodiment of Fig. 2A, each strut 30 also has an axial span defined between the annular walls 22A,22B of the inlet duct 21.

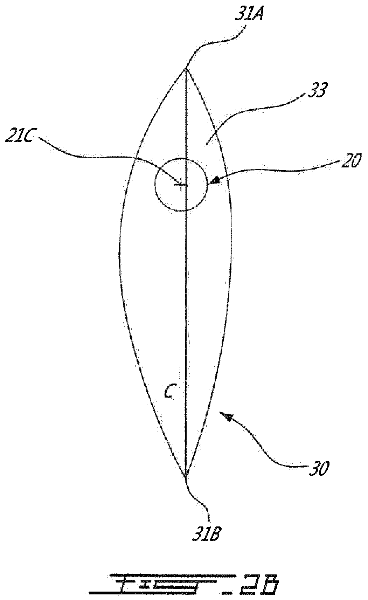

Referring to Figs. 2A and 2B, one or more of the struts 30 is shaped like an airfoil. The airfoil shape of the strut 30 helps to guide the flow of air through the air inlet 11. Each airfoil-shaped strut 30 includes the radially-outer edge 31A which forms the leading edge of the strut 30, and the radially-inner edge 31B forms the trailing edge of the strut 30. The trailing edge 31B is radially closer to the center axis 17 than the leading edge 31A. The chord C of the strut 30 is therefore defined along a line extending between the leading and trailing edges 31A,31B. The chord C therefore extends in a substantially radial direction. By "substantially radial", it is understood that in the frame of reference of the engine 10, the magnitude of the radial direction vector of the chord C is much greater than the magnitude of the axial direction vector of the chord C.

Still referring to Figs. 2A and 2B, one or more of the struts 30 is at least partially hollow. The surfaces of the strut 30 define an inner cavity or passage 33 within the strut 30. The inner passage 33 is a volume delimited by the surfaces of the strut 30. The strut 30 also has openings at opposed axial ends. More particularly, the strut 30 has an opening 34A at forward end of the strut 30, and an opening 34B at an opposite aft end of the strut 30. The first and second openings 34A,34B are spaced apart along the center axis 17. In Fig. 2A, each of the walls 22A,22B has an opening 35 aligned with the first and second openings 34A,34B. More particularly, the wall 22A has an opening 35A aligned with the first opening 34A in the strut 30, and the wall 22B has an opening 35B aligned with the second opening 34B. In an alternate embodiment, there is only one opening for each of the walls 22A,22B of the inlet duct 21. The first and second openings 34A,34B define a through passage extending from one end of the strut 30 to the other. In the depicted embodiment, the first and second openings 34A,34B are aligned along a substantially axial direction A. By "substantially axial", it is understood that in the frame of reference of the engine 10, the axial direction vector is predominant. Stated differently, the magnitude of the axial direction vector, which is parallel to the center axis 17 of the engine 10, is much greater than the magnitude of the radial direction vector. In an alternate embodiment, the first and second openings 34A,34B are aligned in another direction that has a more important radial direction vector, and which is consequently not the substantially axial direction A.

Still referring to Figs. 2A and 2B, the rotatable transmission shaft 20 of the engine 10 extends through the inner passage 33 of the strut 30 and through the first and second openings 34A,34B. The transmission shaft 20 is shown in Fig. 2A through a cut-away portion of the strut 30. Some or all of the transmission shaft 20 is disposed within the strut 30 and extends through the openings 34A,34B of the strut 30. In the depicted embodiment where the first and second openings 34A,34B are aligned along the substantially axial direction A, the transmission shaft 20 also extends through the strut 30 in the substantially axial direction A. Stated differently, a shaft axis 21C of the transmission shaft 20 has, in the frame of reference of the engine 10, an axial direction vector which is parallel to the center axis 17 of the engine 10 and which is predominant. Stated differently, the axial direction vector of the shaft axis 21C has a magnitude that is much greater than the magnitude of the radial direction vector of the shaft axis 21C. In Fig. 2B, the shaft axis 21C is normal to the plane of the illustrated cross-section.

The rotatable transmission shaft 20 therefore extends across the radial air inlet 11 by extending through the interior of the radial strut 30 in the air inlet duct 21. By being housed within the strut 30, the transmission shaft 20 is shielded from the flow of air through the air inlet 11, which helps to minimize losses. A drive system is thus formed by the transmission shaft 20 extending through one of the inlet radial struts 30 of the gas turbine engine 10, and facilitates the transfer of power through the radial inlet strut 30.

The transmission shaft 20 is rotationally supported by bearings 37. In the embodiment of Fig. 2A, the transmission shaft 20 is supported by first and second bearings 37A,37B. Each bearing 37A,37B is located outside the inlet duct 21. More particularly, the first bearing 37A is disposed on a side of one of the annular walls 22A outside the inlet duct 21 adjacent to the strut 30. The second bearing 37B is disposed on a side of the other annular wall 22B outside the inlet duct 21 adjacent to the strut 30. The bearings 37A,37B are, in the depicted embodiment, provided as close as possible to the inlet duct 21. The first and second bearings 37A,37B are axially offset from one another along the center axis 17. The bearings 37A,37B are aligned along the substantially axial direction A. The first and second bearings 37A,37B are located at the same radial distance from the center axis 17 of the engine 10. Each bearing 37A,37B is mounted to one of the walls 22A,22B of the inlet duct 21. More particularly, a bracket 38 mounts each bearing 37A,37B to a corresponding wall 22A,22B of the inlet duct 21. In an alternate embodiment, each bearing 37A,37B is mounted directly to the strut 30. In the depicted embodiment, none of the bearings 37A,37B are provided in the strut 30. In an alternate embodiment, one or more of the bearings 37 is provided within the inner passage 33 of the strut 30. An example of such a bearing 37 includes a journal bearing.

Providing the bearings 37A,37B on either side of the strut 30 helps the transmission shaft 20 sizing criteria to be focused on power rather than rotor dynamics. This may contribute to lowering the outside diameter (OD) of the transmission shaft 20, thereby helping to minimize the size of the strut 30 required to house the transmission shaft 20, and thus minimize any losses associated with the strut 30.

Referring to Figs. 2A and 2B, there is also disclosed a method of operating the engine 10. The method includes drawing air into the air inlet 11 from a radially-outer portion to a radially-inner portion of the air inlet 11. The air inlet 11 has circumferentially spaced-apart struts 30. The method also includes driving one or more rotatable loads 36 of the engine 10 with the transmission shaft 20. The transmission shaft 20 extends across the air inlet 20 and through one of the struts 30.

The above description is meant to be exemplary only, and one skilled in the art will recognize that changes may be made to the embodiments described without departing from the scope of the invention disclosed. For example, although the engine 10 is shown as being a turboprop, it will be appreciated that the engine 10 can have suitable (through-flow from front to rear) by-pass ducting and be used as a turbofan as well. Still other modifications which fall within the scope of the present invention will be apparent to those skilled in the art, in light of a review of this disclosure, and such modifications are intended to fall within the appended claims.

## Claims

1. A gas turbine engine (10), comprising:
a compressor section (12) and a turbine section (14) drivingly engaged with a drive shaft (19), the drive shaft (19) being rotatable about a center axis (17) of the gas turbine engine (10);
a radial air inlet (11) in fluid communication with the compressor section (12), the radial air inlet (11) having an inlet duct (21) defined between two axially-spaced radially-extending annular walls (22A, 22B) and having a plurality of circumferentially-spaced axially-extending struts (30) extending between the annular walls (22A, 22B) adjacent a radially-outer portion of the air inlet (11), at least one of the struts (30) having an internal passage (33) extending between a first opening (34A) in a forward end of the strut (30) and a second opening (34B) in an aft end of the strut (30), and the first and second openings (34A, 34B) being axially spaced apart; and
a transmission shaft (20) extending through the internal passage (33) of said strut (30).

2. The gas turbine engine (10) as defined in claim 1, wherein the first and second openings (34A, 34B) in said strut (30) are aligned along a substantially axial direction, the transmission shaft (20) extending through the openings (34A, 34B) in the substantially axial direction.

3. The gas turbine engine (10) as defined in claim 1 or 2, wherein the transmission shaft (20) is mechanically coupled at a first end (21A) to a first rotatable load (36A) of the gas turbine engine (10) disposed on one side of the inlet duct (21), and mechanically coupled at a second end (21B) to a second rotatable load (36B) disposed on another side of the inlet duct (21), and the first rotatable load (36A) includes the drive shaft (19) and the second rotatable load (36B) includes an accessory gearbox (40) of the gas turbine engine (10), the drive shaft (19) being disposed forward of the radial air inlet (11), and the accessory gearbox (40) being disposed aft of the radial air inlet (11), wherein the first rotatable load (36A) optionally includes a tower shaft (51) mechanically coupled at a first end (51A) to the first end (21A) of the transmission shaft (20), a second end (51B) of the tower shaft (51) being mechanically coupled to the drive shaft (19).

4. The gas turbine engine (10) as defined in any of claims 1 to 3, further comprising first and second bearings (37A, 37B) supporting the transmission shaft (20), the first bearing (37A) disposed on a side of one of the annular walls (22A, 22B) outside the inlet duct (21) adjacent to said strut (30), and the second bearing (37B) disposed on a side of the other annular wall (22A, 22B) outside the inlet duct (21) adjacent to said strut (30), wherein the first and second bearings (37A, 37B) are preferably aligned along a substantially axial direction.

5. The gas turbine engine (10) as defined in any preceding claim, wherein the inlet duct (21) includes an air opening (25) being defined between the annular walls (22A, 22B) at the radially outer portion of the air inlet (11), the air opening (25) extending through an outermost surface (26) of the engine (10).

6. The gas turbine engine (10) as defined in any preceding claim, wherein at least one of the struts (30) has an airfoil shape, and said strut (30) having the airfoil shape includes a leading edge (31A) and a trailing edge (31B), the trailing edge (31B) being radially closer to the center axis (17) than the leading edge (31A), and a chord (C) of said strut (30) extending in a substantially radial direction between the leading and trailing edges (31A, 31B).

7. The gas turbine engine (10) as defined in any preceding claim, wherein each strut (30) has an axial span defined between the annular walls (22A, 22B) of the inlet duct (21), and a radial span defined between an outer edge and an inner edge, the inner edge being radially closer to the center axis (17) than the outer edge.

8. A method of operating a gas turbine engine (10) as defined in any preceding claim, comprising:
drawing air from a radially-outer portion of a radial air inlet (11) of the engine (10) to a radially-inner portion of the radial air inlet (11), the radial air inlet (11) having circumferentially spaced-apart struts (30); and
driving a rotatable load (36A, 36B) of the engine (10) with a transmission shaft (20) extending across the radial air inlet (11) and through one of the struts (30).

9. The method as defined in claim 8, wherein driving the rotatable load (36A, 36B) includes driving the rotatable load (36A, 36B) with the transmission shaft (20) being oriented in a substantially axial direction.

10. The method as defined in claim 8 or 9, further comprising supporting the transmission shaft (20) at each of axially-opposed sides of the radial air inlet (11).

11. The method as defined in claim 8, 9 or 10, wherein driving the rotatable load (36A, 36B) includes driving an accessory gearbox (40) of the engine (10) with the transmission shaft (20).

## Patentansprüche

1. Gasturbinentriebwerk (10), das Folgendes umfasst:
einen Verdichterbereich (12) und einen Turbinenbereich (14) in Antriebseingriff mit einer Antriebswelle (19), wobei die Antriebswelle (19) um eine Zentralachse (17) des Gasturbinentriebwerks (10) rotierbar ist;
einen radialen Lufteinlass (11) in Fluidverbindung mit dem Verdichterbereich (12), wobei der radiale Lufteinlass (11) eine Einlassleitung (21) aufweist, die zwischen zwei axial beabstandeten sich radial erstreckenden ringförmigen Wänden (22A, 22B) definiert ist, und eine Vielzahl von umlaufend beabstandeten sich axial erstreckenden Streben (30) aufweist, die sich benachbart zu einem radial äußeren Abschnitt des Lufteinlasses (11) zwischen den ringförmigen Wänden (22A, 22B) erstreckt, wobei mindestens eine der Streben (30) einen internen Durchlass (33) aufweist, der sich zwischen einer ersten Öffnung (34A) in einem vorderen Ende der Strebe (30) und einer zweiten Öffnung (34B) in einem hinteren Ende der Strebe (30) erstreckt, und wobei die erste und die zweite Öffnung (34A, 34B) axial beabstandet sind; und
eine Getriebewelle (20), die sich durch den internen Durchlass (33) der Strebe (30) erstreckt.

2. Gasturbinentriebwerk (10) nach Anspruch 1, wobei die erste und die zweite Öffnung (34A, 34B) in der Strebe (30) entlang einer im Wesentlichen axialen Richtung ausgerichtet sind, wobei sich die Getriebewelle (20) in einer im Wesentlichen axialen Richtung durch die Öffnungen (34A, 34B) erstreckt.

3. Gasturbinentriebwerk (10) nach Anspruch 1 oder 2, wobei die Getriebewelle (20) an einem ersten Ende (21A) mechanisch an eine erste rotierbare Last (36A) des Gasturbinentriebwerks (10) gekoppelt ist, die an einer Seite der Einlassleitung (21) angeordnet ist, und an einem zweiten Ende (21B) an eine zweite rotierbare Last (36B) mechanisch gekoppelt ist, die an der anderen Seite der Einlassleitung (21) angeordnet ist, und wobei die erste rotierbare Last (36A) die Antriebswelle (19) beinhaltet und die zweite rotierbare Last (36B) ein Nebenaggregatsgetriebe (40) des Gasturbinentriebwerks (10) beinhaltet, wobei die Antriebswelle (19) vor dem radialen Lufteinlass (11) angeordnet ist und das Nebenaggregatsgetriebe (40) hinter dem radialen Lufteinlass (11) angeordnet ist, wobei die erste rotierbare Last (36A) gegebenenfalls eine Schaftwelle (51) beinhaltet, die an einem ersten Ende (51A) mechanisch an das erste Ende (21A) der Getriebewelle (20) gekoppelt ist, wobei ein zweites Ende (51B) der Schaftwelle (51) mechanisch an die Antriebswelle (19) gekoppelt ist.

4. Gasturbinentriebwerk (10) nach einem der Ansprüche 1 bis 3, das ferner ein erstes und ein zweites Lager (37A, 37B) umfasst, welche die Getriebewelle (20) stützen, wobei das erste Lager (37A) an einer Seite von einer der ringförmigen Wände (22A, 22B) außerhalb der Einlassleitung (21) benachbart zu der Strebe (30) angeordnet ist und das zweite Lager (37B) an einer Seite der anderen ringförmigen Wand (22A, 22B) außerhalb der Einlassleitung (21) benachbart zu der Strebe (30) angeordnet ist, wobei das erste und das zweite Lager (37A, 37B) vorzugsweise entlang einer im Wesentlichen axialen Richtung ausgerichtet sind.

5. Gasturbinentriebwerk (10) nach einem der vorstehenden Ansprüche, wobei die Einlassleitung (21) eine Luftöffnung (25) beinhaltet, die an dem radial äußeren Abschnitt des Lufteinlasses (11) zwischen den ringförmigen Wänden (22A, 22B) definiert ist, wobei sich die Luftöffnung (25) durch eine am weitesten außen gelegene Fläche (26) des Triebwerks (10) erstreckt.

6. Gasturbinentriebwerk (10) nach einem der vorstehenden Ansprüche, wobei mindestens eine der Streben (30) eine Strömungsprofilform aufweist und die Strebe (30) mit der Strömungsprofilform eine Anströmkante (31A) und eine Abströmkante (31B) beinhaltet, wobei sich die Abströmkante (31B) radial näher zu der Zentralachse (17) befindet als die Anströmkante (31A) und sich eine Sehne (C) der Strebe (30) in einer im Wesentlichen radialen Richtung zwischen der Anström- und der Abströmkante (31A, 31B) erstreckt.

7. Gasturbinentriebwerk (10) nach einem der vorstehenden Ansprüche, wobei jede Strebe (30) eine axiale Spanne, die zwischen den ringförmigen Wänden (22A, 22B) der Einlassleitung (21) definiert ist, und eine radiale Spanne, die zwischen einer äußeren Kante und einer inneren Kante definiert ist, wobei sich die innere Kante radial näher zu der Zentralachse (17) befindet als die äußere Kante, aufweist.

8. Verfahren zum Betreiben eines Gasturbinentriebwerks (10) nach einem der vorstehenden Ansprüche, das Folgendes umfasst:
Saugen von Luft aus einem radial äußeren Abschnitt eines radialen Lufteinlasses (11) des Triebwerks (10) zu einem radial inneren Abschnitt des radialen Lufteinlasses (11), wobei der radiale Lufteinlass (11) umlaufend beabstandete Streben (30) aufweist; und
Antreiben einer rotierbaren Last (36A, 36B) des Triebwerks (10) mit einer Getriebewelle (20), die sich entlang des radialen Lufteinlasses (11) und durch eine der Streben (30) erstreckt.

9. Verfahren nach Anspruch 8, wobei das Antreiben der rotierbaren Last (36A, 36B) das Antreiben der rotierbaren Last (36A, 36B) mit der Getriebewelle (20) umfasst, die in einer im Wesentlichen axialen Richtung ausgerichtet ist.

10. Verfahren nach Anspruch 8 oder 9, das ferner das Stützen der Getriebewelle (20) an jeder von axial gegenüberliegenden Seiten des radialen Lufteinlasses (11) umfasst.

11. Verfahren nach Anspruch 8, 9 oder 10, wobei das Antreiben der rotierbaren Last (36A, 36B) das Antreiben eines Nebenaggregatsgetriebes (40) des Triebwerks (10) mit der Getriebewelle (20) beinhaltet.

## Revendications

1. Moteur à turbine à gaz (10), comprenant :
une section de compresseur (12) et une section de turbine (14) mises en prise par entraînement avec un arbre d'entraînement (19), l'arbre d'entraînement (19) pouvant tourner autour d'un axe central (17) du moteur à turbine à gaz (10) ;
une entrée d'air radiale (11) en communication fluidique avec la section de compresseur (12), l'entrée d'air radiale (11) ayant un conduit d'entrée (21) défini entre deux parois annulaires s'étendant radialement espacées axialement (22A, 22B) et ayant une pluralité d'entretoises s'étendant axialement espacées circonférentiellement (30) s'étendant entre les parois annulaires (22A, 22B) adjacentes à une partie radialement extérieure de l'entrée d'air (11), au moins l'une des entretoises (30) ayant un passage interne (33) s'étendant entre une première ouverture (34A) dans une extrémité avant de l'entretoise (30) et une seconde ouverture (34B) dans une extrémité arrière de l'entretoise (30), et les première et seconde ouvertures (34A, 34B) étant espacées axialement ; et
un arbre de transmission (20) s'étendant à travers le passage interne (33) de ladite entretoise (30).

2. Moteur à turbine à gaz (10) selon la revendication 1, dans lequel les première et seconde ouvertures (34A, 34B) dans ladite entretoise (30) sont alignées le long d'une direction sensiblement axiale, l'arbre de transmission (20) s'étendant à travers les ouvertures (34A, 34B) dans la direction sensiblement axiale.

3. Moteur à turbine à gaz (10) selon la revendication 1 ou 2, dans lequel l'arbre de transmission (20) est couplé mécaniquement au niveau d'une première extrémité (21A) à une première charge rotative (36A) du moteur à turbine à gaz (10) disposée sur un côté du conduit d'entrée (21), et couplé mécaniquement au niveau d'une seconde extrémité (21B) à une seconde charge rotative (36B) disposée sur un autre côté du conduit d'entrée (21), et la première charge rotative (36A) inclut l'arbre d'entraînement (19) et la seconde charge rotative (36B) inclut une boîte de vitesses accessoire (40) du moteur à turbine à gaz (10), l'arbre d'entraînement (19) étant disposé en avant de l'entrée d'air radiale (11), et la boîte de vitesses accessoire (40) étant disposée à l'arrière de l'entrée d'air radiale (11), dans lequel la première charge rotative (36A) inclut éventuellement un arbre tour (51) couplé mécaniquement au niveau d'une première extrémité (51A) à la première extrémité (21A) de l'arbre de transmission (20), une seconde extrémité (51B) de l'arbre tour (51) étant couplée mécaniquement à l'arbre d'entraînement (19).

4. Moteur à turbine à gaz (10) selon l'une quelconque des revendications 1 à 3, comprenant en outre des premier et second paliers (37A, 37B) supportant l'arbre de transmission (20), le premier palier (37A) étant disposé sur un côté de l'une des parois annulaires (22A, 22B) à l'extérieur du conduit d'entrée (21) adjacent à ladite entretoise (30), et le second palier (37B) étant disposé sur un côté de l'autre paroi annulaire (22A, 22B) à l'extérieur du conduit d'entrée (21) adjacent à ladite entretoise (30), dans lequel les premier et second paliers (37A, 37B) sont de préférence alignés le long d'une direction sensiblement axiale.

5. Moteur a turbine à gaz (10) selon une quelconque revendication précédente, dans lequel le conduit d'entrée (21) inclut une ouverture d'air (25) étant définie entre les parois annulaires (22A, 22B) au niveau de la partie radialement extérieure de l'entrée d'air (11), l'ouverture d'air (25) s'étendant à travers une surface la plus extérieure (26) du moteur (10).

6. Moteur a turbine à gaz (10) selon une quelconque revendication précédente, dans lequel au moins l'une des entretoises (30) a une forme de profil aérodynamique, et ladite entretoise (30) ayant la forme de profil aérodynamique inclut un bord d'attaque (31A) et un bord de fuite (31B), le bord de fuite (31B) étant radialement plus proche de l'axe central (17) que le bord d'attaque (31A), et une corde (C) de ladite entretoise (30) s'étendant dans une direction sensiblement radiale entre les bords d'attaque et de fuite (31A, 31B).

7. Moteur a turbine à gaz (10) selon une quelconque revendication précédente, dans lequel chaque entretoise (30) a une portée axiale définie entre les parois annulaires (22A, 22B) du conduit d'entrée (21), et une portée radiale définie entre un bord extérieur et un bord intérieur, le bord intérieur étant radialement plus proche de l'axe central (17) que le bord extérieur.

8. Procédé de fonctionnement d'un moteur à turbine à gaz (10) selon une quelconque revendication précédente, comprenant :
l'aspiration d'air d'une partie radialement extérieure d'une entrée d'air radiale (11) du moteur (10) vers une partie radialement intérieure de l'entrée d'air radiale (11), l'entrée d'air radiale (11) ayant des entretoises espacées circonférentiellement (30) ; et
l'entraînement d'une charge rotative (36A, 36B) du moteur (10) avec un arbre de transmission (20) s'étendant à travers l'entrée d'air radiale (11) et à travers l'une des entretoises (30).

9. Procédé selon la revendication 8, dans lequel l'entraînement de la charge rotative (36A, 36B) inclut l'entraînement de la charge rotative (36A, 36B) avec l'arbre de transmission (20) étant orienté dans une direction sensiblement axiale.

10. Procédé selon la revendication 8 ou 9, comprenant en outre le support de l'arbre de transmission (20) sur chacun des côtés axialement opposés de l'entrée d'air radiale (11).

11. Procédé selon la revendication 8, 9 ou 10, dans lequel l'entraînement de la charge rotative (36A, 36B) inclut l'entraînement d'une boîte de vitesses accessoire (40) du moteur (10) avec l'arbre de transmission (20).
